# EUROPEAN PATENT SPECIFICATION

(11) **EP 3 250 441 B1**
(45) Date of publication and mention of the grant of the patent: **02.01.2019**
(21) Application number: 16712460.1
(22) Date of filing: 27.01.2016
(51) Int. Cl.: B62D 5/04, B62D 7/08

(54) **STEERING UNIT FOR VEHICLE WHEELS**
LENKEINHEIT FÜR FAHRZEUGRÄDER
UNITÉ DE BRAQUAGE POUR ROUES DE VÉHICULE

(30) Priority: 30.01.2015 IT MO20150015
(43) Date of publication of application: 06.12.2017
(73) Proprietor: Borghi Assali S.r.l., 41030 Bomporto (MO) frazione Villavara (IT)
(72) Inventor: BORGHI, Ivan, 41030 Bomporto (MO) frazione Villavara (IT)
(74) Representative: Brunacci, Marco
(86) International application number: PCT/IB2016/050397
(87) International publication number: WO 2016/120797

(56) References cited:
- WO-A2-2011/141794
- US-A- 6 039 143

## Description

### Technical Field

The present invention relates to a steering unit for vehicle wheels.

### Background Art

Steering units are known for vehicle wheels from EP 1775196, EP 2006187 and EP 2569205.

More particularly, EP 1775196 describes a steering unit with a hub which supports in rotation each vehicle wheel or group of wheels steering around the same axis of rotation.

The steering unit described by EP 1775196 also has a support element associated with the hub and connectable to a vehicle.

The support element is movable in rotation around a vertical axis, so as to bring in rotation also the corresponding hub, and is kinematically connected to an electric motor via a reduction unit.

As mentioned above, each wheel or group of wheels is supported by a corresponding hub, so that, as shown in Figures 2 and 3 of EP 1755196, the vehicles with two steered wheels or groups of steered wheels have two electric motors, i.e. one for each wheel or group of wheels steering around the same axis.

Since the steered wheels or groups of steered wheels of a vehicle must be synchronized to one another, the steering units described by EP 1755196 must have an electric differential, of the type known to the expert in the field. This electric differential is therefore adapted to connect to one another the electric motors of the wheels or of the groups of wheels steering around different axes of rotation.

The use of these steering units is however difficult precisely in the case of vehicles having at least two steered wheels or groups of steered wheels due to the use of such electric differentials.

In fact, the steering units of known type which use an electric differential result complex from the constructive point of view and also considerably expensive.

The increase in production costs, and therefore of retail prices, is due not only to the presence of an electric differential, but also to the need of using an electric motor for each steered wheel or group of steered wheels.

In fact, the electric motors, generally characterized by high rotation speeds, require for the presence of precise reduction units in order to allow the correct control of the steering angle of the wheels.

EP 2006187 describes instead a steering unit wherein the steered wheels, associated with relative support elements (spindles) movable in rotation around respective axes, are mechanically connected to one another.

More particularly, the steered wheels are mechanically connected to one another by means of the rod of a double-acting hydraulic cylinder, the displacement of which is controlled by a related hydraulic circuit.

The translational movement of the rod, commanded by the rotation of the steering wheel of the related vehicle operatively connected to the aforementioned hydraulic circuit, causes therefore the support elements of the wheels to rotate around the related axes.

EP 2006187 also has several drawbacks.

In fact, the steering unit described by EP 2006187 is not very precise and has higher response times compared to those of an electric motor, which affect the responsiveness of the related vehicle.

In addition, the steering unit described by EP 2006187 is considerably complex from the constructive point of view, also given the presence of the hydraulic circuit which feeds the double-acting cylinder, with a consequent increase in production costs.

EP 2569205, finally, discloses a steering unit according to the preamble of claim 1, wherein the spindles supporting the steered wheels are mechanically connected to one another by means of a steering element.

The steering element can be actuated by means of a single electric motor by interposition of a motion reduction mechanism constituted by a worm screw coupling and by a screw-nut screw coupling arranged in series.

This solution, if on the one hand, allows to obtain a high transmission ratio by means of a mechanism with reduced overall dimensions, on the other hand, implies a rather low mechanical efficiency (around 57%) and requires, therefore, oversizing of the electric motor and high energy consumption.

These circumstances result in a significant increase in the costs of the steering unit which, inevitably, affect the retail price, risking to make the product less attractive for customers.

### Description of the Invention

The main aim of the present invention is to provide a steering unit for vehicle wheels which is very efficient from the point of view of mechanical efficiency and, at the same time, has particularly reduced overall dimensions.

A further object of the present invention is to provide a steering unit which is simpler from a constructive point of view than the steering units of known type.

One object of the present invention is to provide a steering unit which has lower manufacturing costs than the steering units of known type.

Another object of the present invention is to provide a steering unit for vehicle wheels which allows to overcome the mentioned drawbacks of the prior art within the ambit of a simple, rational, easy, effective to use as well as affordable solution.

The above mentioned objects are achieved by the present steering unit for vehicle wheels, having the characteristics of claim 1.

### Brief Description of the Drawings

Other characteristics and advantages of the present invention will become better evident from the description of a preferred, but not exclusive, embodiment of a steering unit for vehicle wheels, illustrated by way of an indicative, but nonlimiting, example in the accompanying drawings, in which:

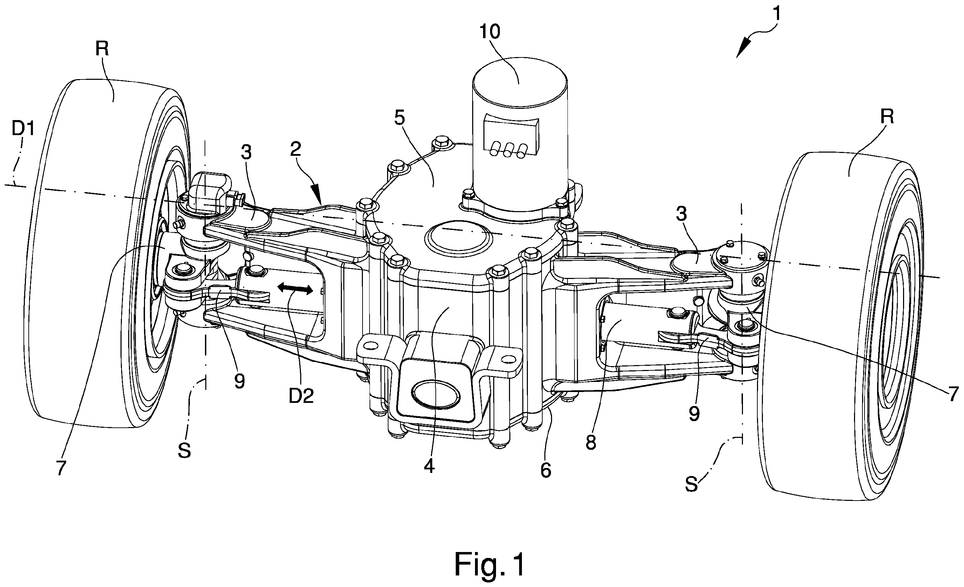

Figure 1 is an axonometric view of the steering unit according to the invention;

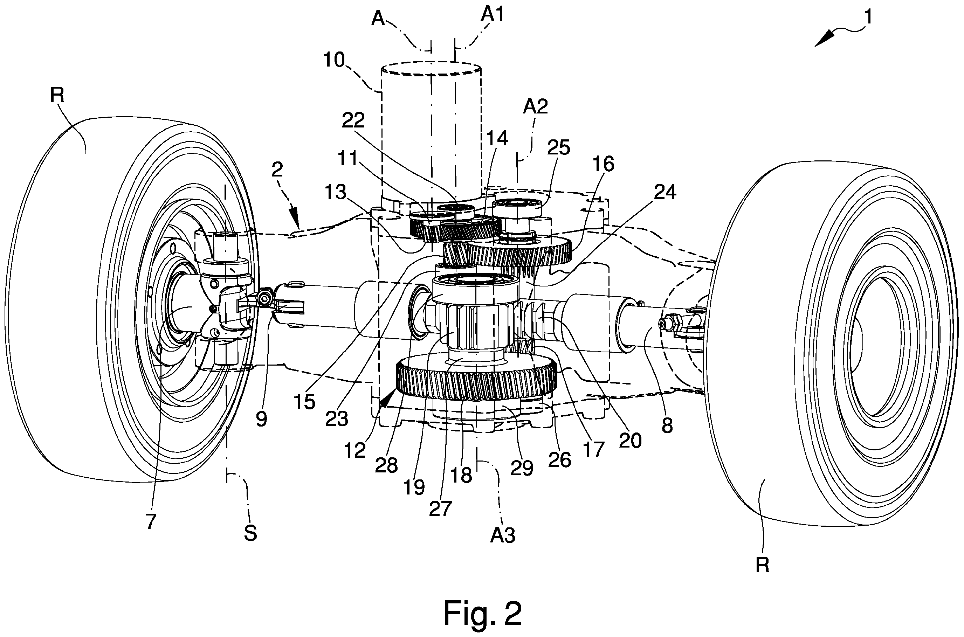

Figure 2 is an axonometric view, partially in transparency and from another angle, of the steering unit according to the invention;
Figure 3 is a sectional view of the steering unit according to the invention.

### Embodiments of the Invention

With particular reference to such figures, reference number 1 globally indicates a steering unit for vehicle wheels.

The steering unit 1 comprises:
- at least an axle 2 connectable to a vehicle, the latter not being shown for simplicity of representation. The axle 2 extends between two opposite extremities 3 along a main direction D1 substantially horizontal. Usefully, the axle 2 is shaped so as to define, in a substantially median position with respect to the two opposite extremities 3, a box-shaped element 4, 5, 6 in which various components of the steering unit 1 are housed, as will be more fully described below. The box-shaped element 4, 5, 6 is defined by a main body 4, open above and below, a top closure wall 5 and a bottom closure wall 6;
- at least a pair of support elements 7, also called spindles, which support two respective wheels R and which are hinged at the opposite extremities 3 so as to rotate around respective steering axes S substantially vertical. Each support element 7 is therefore adapted to allow rotation of the related wheel R around the corresponding steering axis S;
- at least a connection element 8, that mechanically connects the support elements 7 together. In particular, the connection element 8 has an elongated shape and has two opposite end portions that are connected to the support elements 7 by means of respective connecting rods 9, which are therefore hinged on one side to the connection element 8 and on the opposite side to the related support element 7. The connection element 8 lies on a lying plane P substantially horizontal and is movable in translation along an adjustment direction D2 substantially horizontal and parallel to the main direction D1 so as to rotate the support elements 7 around the steering axes S. The adjustment direction D2 substantially corresponds to the direction of longitudinal extension of the connection element 8. The connection element 8 is movable along both ways identified by the adjustment direction D2 to allow rotation of the support elements 7 around the related steering axes S in both ways of rotation;
- a single electric motor 10, which is mounted on the axle 2 and is adapted to control the rotation of the support elements 7 around the steering axes S. The electric motor 10, which can be e.g. of the direct current (DC) or alternating current (AC) type, comprises at least an output shaft 11 movable in rotation around a main axis A substantially vertical. The output shaft 11 is movable in both ways of rotation around the main axis A. The electric motor 10 is mounted e.g. on the top closure wall 5, with the output shaft 11 ending inside the box-shaped element 4, 5, 6; and
- motion transfer means 12 for transferring the motion from the output shaft 11 to the connection element 8, which are adapted to convert the rotary motion of the output shaft 11 into the translational motion of the connection element 8. In particular, the motion transfer means 12, which e.g. are housed inside the box-shaped element 4, 5, 6, comprise:
   - a cascade of three-stage gears of gear wheels, which allow to reduce the transmission ratio from stage to stage. The cascade of gears is composed of a first reduction stage 13, 14 and a second reduction stage 15, 16 which are arranged above the lying plane P and of a third reduction stage 17, 18 which is arranged below the lying plane P; and
   - a rack-pinion connection 19, 20 having a pinion element 19 associated with the third reduction stage 17, 18 and a rack element 20 associated
   with the connection element 8 and meshing with the pinion element 19.

More in detail, the first reduction stage 13, 14 comprises a first driving gear wheel 13 mounted on the output shaft 11 and a first driven gear wheel 14 mounted on a first auxiliary shaft 21 movable in rotation around a first auxiliary axis A1 substantially vertical, wherein the first gear wheels 13, 14 mesh with each other and the first driving gear wheel 13 has a diameter less than the first driven gear wheel 14.

The first driving gear wheel 13 and the first driven gear wheel 14 lie on a first auxiliary plane P1 substantially horizontal arranged above the lying plane P.

The two extremities of the first auxiliary shaft 21 are supported by respective rotational bearings associated with the axle 2.

In particular, the upper extremity is supported by a first top rotational bearing 22 associated with the top closure wall 5 while the lower extremity is supported by a first bottom rotational bearing 23 mounted inside the main body 4.

The second reduction stage 15, 16 comprises a second driving gear wheel 15 mounted on the first auxiliary shaft 21 and a second driven gear wheel 16 mounted on a second auxiliary shaft 24 movable in rotation around a second auxiliary axis A2 substantially vertical, wherein the second gear wheels 15, 16 mesh with each other and the second driving gear wheel 15 has a diameter less than the second driven gear wheel 16.

The second driving gear wheel 15 and the second driven gear wheel 16 lie on a second auxiliary plane P2 substantially horizontally arranged above the lying plane P.

The two extremities of the second auxiliary shaft 24 are supported by respective rotational bearings associated with the axle 2.

In particular, the upper extremity is supported by a second top rotational bearing 25 associated with the top closure wall 5 while the lower extremity is supported by a second bottom rotational bearing 26 associated with the bottom closure wall 6.

The third reduction stage 17, 18 comprises a third driving gear wheel 17 mounted on the second auxiliary shaft 24 and a third driven gear wheel 18 mounted on a third auxiliary shaft 27 movable in rotation around a third auxiliary axis A3 substantially vertical, wherein the third gear wheels 17, 18 mesh with each other and the third driving gear wheel 17 has a diameter less than the third driven gear wheel 18.

The third driving gear wheel 17 and the third driven gear wheel 18 lie on a third auxiliary plane P3 substantially horizontal arranged below the lying plane P. The two extremities of the third auxiliary shaft 27 are supported by respective rotational bearings associated with the axle 2.

In particular, the upper extremity is supported by a third top rotational bearing 28 mounted inside the main body 4 while the lower extremity is supported by a third bottom rotational bearing 29 associated with the bottom closure wall 6.

The pinion element 19 which meshes with the rack element 20 is mounted on the third auxiliary shaft 27 and, usefully, lies on the lying plane P on which the rack element 20 also lies.

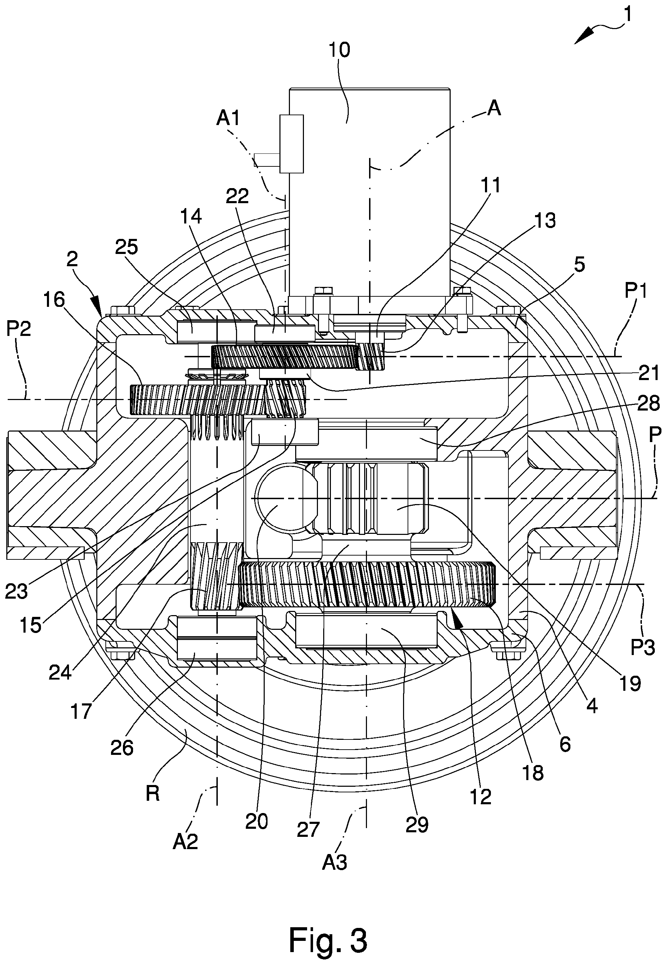

As is visible from Figure 3, the steering unit 1 is made so that:
- the first auxiliary shaft 21 extends roughly between the first auxiliary plane P1 and the second auxiliary plane P2 while remaining above the lying plane P;
- the second auxiliary shaft 24 extends roughly between the second auxiliary plane P2 and the third auxiliary plane P3 passing through the lying plane P; and
- the third auxiliary shaft 27 extends roughly between the third auxiliary plane P3 and the lying plane P.

The second auxiliary shaft 24 and the third auxiliary shaft 27 are arranged on opposite sides with respect to the rack element 20.

In accordance with what previously described and illustrated in the figures, the particular arrangement of the gear wheels 13, 14, 15, 16, 17, 18 and of the auxiliary shafts 21, 24, 27 allows, in practice, to fully exploit the space around the connection element 8 so as to allow the use of a cascade of gears with three reduction stages, which ensures, on the one hand, high transmission ratio and mechanical efficiency (considerably higher than other mechanisms such as, e.g., screw-nut screw mechanisms) and, on the other hand, limiting the overall dimensions of the box-shaped element 4, 5, 6.

The operation of steering unit 1 is as follows.

The rotation of the steering wheel of the vehicle made by an operator is processed into a corresponding electric signal which is then sent to the electric motor 10.

The electric motor 10 is then activated by said electric signal and it actuates the related output shaft 11 in rotation accordingly.

The rotation of the output shaft 11 causes, due to mutual coupling, the rotation of the gear wheels 13, 14, 15, 16, 17, 18 and of respective auxiliary shafts 21, 24, 25 by transferring the motion to the pinion element 19.

The rotation of the pinion element 19 entails, due to the mesh of the respective toothing interposed between them, the translational movement of the rack element 20 along the adjustment direction D2, therefore transforming the rotary motion of the pinion element 19 into the translational motion of the connection element 8.

The sense of rotation of the output shaft 11, in turn related to the way of rotation of the steering wheel, influences the sense of rotation of the pinion element 19 and, in conclusion, the direction of translation of the connection element 8.

The connection element 8 can therefore move in the two directions defined by the adjustment direction D2 depending on the sense of rotation of the steering wheel.

The displacement of the connection element 8 is then transferred to the support elements 7 associated with the opposite extremities 3 of the axle 2 by means of the connecting rods 9 interposed therebetween.

More in detail, the translational movement of the connection element 8 causes the rotation of the connecting rods 9 and therefore of the support elements 7 associated with each of these connecting rods 9.

The wheels R, which are associated with the support elements 7, are therefore made to steer by means of the connection element 8.

It has been found in practice that the described invention achieves the proposed objects and in particular the fact is stressed that the translational movement of the connection element is obtained by means of a cascade of gears and a pinion-rack connection which are arranged to obtain high transmission ratios with a very high mechanical efficiency (around 80-90%) and particularly limited overall dimensions.

This particular constructive solution allows to exploit surprisingly the synergy due to the combination of the electric motor and the mechanical connection of the steered wheels, thus obtaining a precise and prompt adjustment of steering.

Furthermore, the steering unit according to the invention turns out to be less expensive from a constructive point of view compared to the known types of units described in the introduction since it allows using an electric motor mechanically connected to the wheels by means of a solution of simple implementation, safe operation and remarkably efficient from an energy point of view.

## Claims

1. Steering unit (1) for vehicle wheels, comprising:
- at least an axle (2) connectable to a vehicle and extending between two opposite extremities (3) along a main direction (D1) substantially horizontal;
- at least a pair of support elements (7) for wheels hinged at said opposite extremities (3) around respective steering axes (S) substantially vertical;
- a connection element (8) that mechanically connects together said support elements (7), lies on a lying plane (P) substantially horizontal and is movable in translation along an adjustment direction (D2) substantially horizontal and parallel to said main direction (D1) so as to rotate said support elements (7) around said steering axes (S);
- a single electric motor (10), mounted on said axle (2) and adapted to control the rotation of said support elements (7) around said steering axes (S) and comprising at least an output shaft (11) movable in rotation around a main axis (A) substantially vertical; and
- motion transfer means (12) for transferring the motion from said output shaft (11) to said connection element (8), adapted to convert the rotary motion of said output shaft (11) into the translational motion of said connection element (8);
**characterized by** the fact that said motion transfer means (12) comprise:
- a cascade of three-stage gears of gear wheels, wherein a first reduction stage (13, 14) and a second reduction stage (15, 16) are arranged above said lying plane (P) and a third reduction stage (17, 18) is arranged below said lying plane (P); and
- a rack-pinion connection (19, 20) having a pinion element (19) associated with said third reduction stage (17, 18) and a rack element (20) associated with said connection element (8) and meshing with said pinion element (19).

2. Steering unit (1) according to claim 1, **characterized by** the fact that said first reduction stage (13, 14) comprises a first driving gear wheel (13) mounted on said output shaft (11) and a first driven gear wheel (14) mounted on a first auxiliary shaft (21) movable in rotation around a first auxiliary axis (A1) substantially vertical, wherein said first gear wheels (13, 14) mesh with each other and said first driving gear wheel (13) has a diameter less than said first driven gear wheel (14).

3. Steering unit (1) according to claim 2, **characterized by** the fact that said first driving gear wheel (13) and said first driven gear wheel (14) lie on a first auxiliary plane (P1) substantially horizontal arranged above said lying plane (P).

4. Steering unit (1) according to claim 2 or 3, **characterized by** the fact that said second reduction stage (15, 16) comprises a second driving gear wheel (15) mounted on said first auxiliary shaft (21) and a second driven gear wheel (16) mounted on a second auxiliary shaft (24) movable in rotation around a second auxiliary axis (A2) substantially vertical, wherein said second gear wheels (15, 16) mesh with each other and said second driving gear wheel (15) has a diameter less than said second driven gear wheel (16).

5. Steering unit (1) according to claim 4, **characterized by** the fact that said second driving gear wheel (15) and said second driven gear wheel (16) lie on a second auxiliary plane (P2) substantially horizontal arranged above said lying plane (P).

6. Steering unit (1) according to claim 4 or 5, **characterized by** the fact that said third reduction stage (17, 18) comprises a third driving gear wheel (17) mounted on said second auxiliary shaft (24) and a third driven gear wheel (18) mounted on a third auxiliary shaft (27) movable in rotation around a third auxiliary axis (A3) substantially vertical, wherein said third gear wheels (17, 18) mesh with each other and said third driving gear wheel (17) has a diameter less than said third driven gear wheel (18).

7. Steering unit (1) according to claim 6, **characterized by** the fact that said third driving gear wheel (17) and said third driven gear wheel (18) lie on a third auxiliary plane (P3) substantially horizontal arranged below said lying plane (P).

8. Steering unit (1) according to claim 7, **characterized by** the fact that said second auxiliary shaft (24) extends between said second auxiliary plane (P2) and said third auxiliary plane (P3) passing through said lying plane (P).

9. Steering unit (1) according to one or more of claims 6 to 8, **characterized by** the fact that said pinion element (19) is mounted on said third auxiliary shaft (27) and lies on said lying plane (P).

10. Steering unit (1) according to one or more of the preceding claims, **characterized by** the fact that said second auxiliary shaft (24) and said third auxiliary shaft (27) are arranged on opposite sides with respect to said rack element (20).

## Patentansprüche

1. Lenkeinheit (1) für Fahrzeugräder, umfassend:
- mindestens eine Achse (2), die mit einem Fahrzeug verbindbar ist und sich zwischen zwei gegenüberliegenden Endpunkten (3) entlang einer im Wesentlichen horizontalen Hauptrichtung (D1) erstreckt;
- mindestens ein Paar von Stützelementen (7) für Räder, die an den gegenüberliegenden Endpunkten (3) an im Wesentlichen vertikalen Lenkachsen (S) angelenkt sind;
- ein Verbindungselement (8), das die Stützelemente (7) untereinander mechanisch verbindet, auf einer im Wesentlichen horizontalen, liegenden Ebene (P) liegt und entlang einer im Wesentlichen horizontalen Verstellrichtung (D2) und parallel zur Hauptrichtung (DI) translatorisch beweglich ist, um die Stützelemente (7) um die Lenkachsen (S) zu drehen;
- einen einzelnen Elektromotor (10), der an der Achse (2) angebracht und dazu eingerichtet ist, die Drehung der Stützelemente (7) um die Lenkachsen (S) zu steuern, und mindestens eine Ausgangswelle (11) aufweist, die um eine im Wesentlichen vertikale Hauptachse (A) drehbar ist; und
- Bewegungsübertragungsmittel (12) zum Übertragen der Bewegung von der Ausgangswelle (11) zu dem Verbindungselement (8), die derart eingerichtet sind, die Drehbewegung der Ausgangswelle (11) in die Translationsbewegung des Verbindungselements (8) umzuwandeln;
**dadurch gekennzeichnet, dass** die Bewegungsübertragungsmittel (12) umfassen:
- eine Kaskade eines dreistufigen Getriebes von Zahnrädern, wobei eine erste Untersetzungsstufe (13, 14) und eine zweite Untersetzungsstufe (15, 16) oberhalb der liegenden Ebene (P) angeordnet sind und eine dritte Untersetzungsstufe (17, 18) unterhalb der genannten liegenden Ebene (P) angeordnet ist; und
- eine Zahnstangen-Ritzel-Verbindung (19, 20) mit einem mit der dritten Untersetzungsstufe (17, 18) verbundenen Ritzelelement (19) und einer mit dem Verbindungselement (8) verbundenen und in das Ritzelelement (19) eingreifenden Zahnstangenelement (20).

2. Lenkeinheit (1) nach Anspruch 1, **dadurch gekennzeichnet, dass** die erste Untersetzungsstufe (13, 14) ein erstes Antriebszahnrad (13), das an der Ausgangswelle (11) angebracht ist, und ein erstes angetriebenes Zahnrad (14), das an einer ersten Hilfswelle (21) angebracht ist, die um eine erste im Wesentlichen vertikale Hilfsachse (A1) drehbar ist, umfasst, wobei die ersten Zahnräder (13, 14) ineinander greifen und das erste Antriebszahnrad (13) einen geringeren Durchmesser als das erste angetriebene Zahnrad (14) aufweist.

3. Lenkeinheit (1) nach Anspruch 2, **dadurch gekennzeichnet, dass** das erste Antriebszahnrad (13) und das erste angetriebene Zahnrad (14) auf einer ersten im Wesentlichen horizontalen Hilfsebene (P1) liegen, die oberhalb der liegenden Ebene (P) angeordnet ist.

4. Lenkeinheit (1) nach Anspruch 2 oder 3, **dadurch gekennzeichnet, dass** die zweite Untersetzungsstufe (15, 16) ein zweites Antriebszahnrad (15), das an der ersten Hilfswelle (21) angebracht ist, und ein zweites angetriebenes Zahnrad (16), das an einer zweiten Hilfswelle (24) angebracht ist, die um eine zweite im Wesentlichen vertikale Hilfsachse (A2) drehbar ist, umfasst, wobei die zweiten Zahnräder (15, 16) ineinander greifen und das zweite Antriebszahnrad (15) einen kleineren Durchmesser als das zweite angetriebene Zahnrad (16) aufweist.

5. Lenkeinheit (1) nach Anspruch 4, **dadurch gekennzeichnet, dass** das zweite Antriebszahnrad (15) und das zweite angetriebene Zahnrad (16) auf einer zweiten im Wesentlichen horizontalen Hilfsebene (P2) liegen, die oberhalb der liegenden Ebene (P) angeordnet ist.

6. Lenkeinheit (1) nach Anspruch 4 oder 5, **dadurch gekennzeichnet, dass** die dritte Untersetzungsstufe (17, 18) ein drittes Antriebszahnrad (17), das an der zweiten Hilfswelle (24) angebracht ist, und ein drittes angetriebenes Zahnrad (18), das an einer dritten Hilfswelle (27) angebracht ist, die um eine dritte im Wesentlichen vertikale Hilfsachse (A3) drehbar ist, umfasst, wobei die dritten Zahnräder (17, 18) ineinander greifen und das dritte Antriebszahnrad (17) einen kleineren Durchmesser als das dritte angetriebene Zahnrad (18) aufweist.

7. Lenkeinheit (1) nach Anspruch 6, **dadurch gekennzeichnet, dass** das dritte Antriebszahnrad (17) und das dritte angetriebene Zahnrad (18) auf einer dritten im Wesentlichen horizontalen Hilfsebene (P3) liegen, die unterhalb der liegenden Ebene (P) angeordnet ist.

8. Lenkeinheit (1) nach Anspruch 7, **dadurch gekennzeichnet, dass** sich die zweite Hilfswelle (24) zwischen der zweiten Hilfsebene (P2) und der dritten Hilfsebene (P3) erstreckt und durch die liegende Ebene (P) verläuft.

9. Lenkeinheit (1) nach einem oder mehreren der Ansprüche 6 bis 8, **dadurch gekennzeichnet, dass** das Ritzelelement (19) an der dritten Hilfswelle (27) angebracht ist und auf der liegenden Ebene (P) liegt.

10. Lenkeinheit (1) nach einem oder mehreren der vorangegangenen Ansprüche, **dadurch gekennzeichnet, dass** die zweite Hilfswelle (24) und die dritte Hilfswelle (27) auf gegenüberliegenden Seiten bezüglich des Zahnstangenelements (20) angeordnet sind.

## Revendications

1. Unité de pilotage (1) pour des roues de véhicules, comprenant :
- au moins un essieu (2) pouvant être raccordé à un véhicule et s'étendant entre deux extrémités opposées (3) le long d'une direction principale (D) sensiblement horizontale ;
- au moins une paire d'éléments de support (7) pour des roues articulées au niveau desdites extrémités opposés (3) autour d'un axe de pilotage (S) sensiblement vertical ;
- un élément de raccord (8) qui raccorde mécaniquement lesdits éléments de support (7) ensemble, se trouvant sur un plan (P) sensiblement horizontal et pouvant être déplacé en translation le long d'une direction d'ajustement (D2) sensiblement horizontale et parallèle à ladite direction principale (D) de sorte à faire pivoter lesdits éléments support (7) autour desdits axes de pilotage (S)
- un unique moteur électrique (10), monté sur ledit essieu (2) et adapté pour commander la rotation desdits éléments de support (7) autour desdits axes de pilotage (S) et comprenant au moins un arbre de sortie (11) pouvant être déplacé en rotation autour d'un axe principal (A) sensiblement vertical ; et
- des moyens de transfert de mouvement (12) pour transférer le mouvement dudit arbre de sortie (11) audit élément de raccord (8), adapté pour convertir le mouvement de rotation dudit arbre de sortie (11) en mouvement de translation dudit élément de raccord (8) ;
**caractérisée en ce que** lesdits moyens de transfert de mouvement (12) comprennent :
- des engrenages à trois étages en cascade de roues d'engrenage, dans lequel un premier étage de réduction (13, 14) et un deuxième étage de réduction (15, 16) sont installés au-dessus dudit plan (P) et un troisième étage de réduction (17, 18) est installé en dessous dudit plan (P) ; et
- un raccord de pignon et crémaillère (19, 20) possédant un élément de pignon (19) associé audit troisième étage de réduction (17, 18) et un élément de crémaillère (20) associé audit élément de raccord (8) et s'engrenant avec ledit élément de pignon (19).

2. Unité de pilotage (1) selon la revendication 1, **caractérisée en ce que** ledit premier étage de réduction (13, 14) comprend une première roue d'engrenage motrice (13) montée sur ledit arbre de sortie (11) et une première roue d'engrenage motrice (14) montée sur un premier arbre auxiliaire (21) pouvant être déplacé en rotation autour d'un premier axe auxiliaire (A1) sensiblement vertical, dans lequel lesdites premières roues d'engrenage (13, 14) s'engrènent les unes avec les autres et ladite première roue d'engrenage motrice (13) possède un diamètre inférieur à celui de ladite première roue d'engrenage motrice (14).

3. Unité de pilotage (1) selon la revendication 2, **caractérisée en ce que** ladite première roue d'engrenage motrice (13) et ladite première roue d'engrenage motrice (14) se trouvent sur un premier plan auxiliaire (P1) sensiblement horizontal installé au-dessus dudit plan (P).

4. Unité de pilotage (1) selon la revendication 2 ou 3, **caractérisée en ce que** ledit deuxième étage de réduction (15, 16) comprend une deuxième roue d'engrenage motrice (15) montée sur ledit premier arbre auxiliaire (21) et une deuxième roue d'engrenage motrice (16) montée sur un deuxième arbre auxiliaire (24) pouvant être déplacé en rotation autour d'un deuxième axe auxiliaire (A2) sensiblement vertical, dans lequel les deuxièmes roues d'engrenage (15, 16) s'engrènent les unes avec les autres et ladite deuxième roue d'engrenage motrice (15) possède un diamètre inférieur à celui de ladite deuxième roue d'engrenage motrice (16).

5. Unité de pilotage (1) selon la revendication 4, **caractérisée en ce que** ladite deuxième roue d'engrenage motrice (15) et ladite deuxième roue d'engrenage motrice (16) se trouvent sur un deuxième plan auxiliaire (P2) sensiblement horizontal installé au-dessus dudit plan (P).

6. Unité de pilotage (1) selon la revendication 4 ou 5, **caractérisée en ce que** ledit troisième étage de réduction (17, 18) comprend une troisième roue d'engrenage motrice (17) montée sur ledit deuxième axe auxiliaire (24) et une troisième roue d'engrenage motrice (18) montée sur un troisième arbre auxiliaire (27) pouvant être déplacé en rotation autour d'un troisième axe auxiliaire (A3) sensiblement vertical, dans lequel lesdites troisièmes roues d'engrenage (17, 18) s'engrènent les unes avec les autres et ladite troisième roue d'engrenage motrice (17) possède un diamètre inférieur à celui de ladite troisième roue d'engrenage motrice (18).

7. Unité de pilotage (1) selon la revendication 6, **caractérisée en ce que** ladite troisième roue d'engrenage motrice (17) et ladite troisième roue d'engrenage motrice (18) se trouvent sur un troisième plan auxiliaire (P3) sensiblement horizontal installé en-dessous dudit plan (P).

8. Unité de pilotage (1) selon la revendication 7, **caractérisée en ce que** ledit deuxième arbre auxiliaire (24) s'étend entre ledit deuxième plan auxiliaire (P2) et ledit troisième plan auxiliaire (P3) passant à travers ledit plan (P).

9. Unité de pilotage (1) selon l'une ou plusieurs des revendications 6 à 8, **caractérisée en ce que** ledit élément de pignon (19) est monté sur ledit troisième arbre auxiliaire (27) et se trouve sur ledit plan (P).

10. Unité de pilotage (1) selon l'une ou plusieurs des revendications précédentes, **caractérisée en ce que** ledit deuxième arbre auxiliaire (23) et ledit troisième arbre auxiliaire (27) sont installés du côté opposé par rapport audit élément de crémaillère (20).
